# EUROPÄISCHE PATENTANMELDUNG

(11) **EP 2 642 173 A1**
(43) Veröffentlichungstag der Anmeldung: **25.09.2013**
(21) Anmeldenummer: 13154740.8
(22) Anmeldetag: 11.02.2013
(51) Int. Cl.: F16L 25/00

(54) **Anschlussvorrichtung für einen ringgewellten Schlauch**

(30) Priorität: 20.03.2012 DE 202012002791 U
(71) Anmelder: Witzenmann GmbH, 75175 Pforzheim (DE)
(72) Erfinder: Abraham, Christoph, 75180 Pforzheim (DE); Gehring, Matthias, 75334 Straubenhardt (DE); Klein, Tobias, 76137 Karlsruhe (DE)
(74) Vertreter: Lemcke, Brommer & Partner

(57) **Zusammenfassung**

Die Erfindung betrifft eine Anschlussvorrichtung für einen ringgewellten Metallschlauch (2) mit einem ringartigen Element (4), das mittels einer Überwurfmutter (3) oder einer Einschraubhütse (3') den Metalischlauch (2) an ein Anschlussstück (1) drückt, welche dadurch gekennzeichnet ist, dass das ringartige Element (4) eine abgeschrägte Außenfläche (9) aufweist.

## Beschreibung

Die Erfindung betrifft eine Anschlussvorrichtung für einen ringgewellten Metallschlauch mit einem ringartigen Element, das mittels einer Überwurfmutter oder einer Einschraubhülse den Metallschlauch an ein Anschlussstück drückt.

Wellschläuche werden in Grundtypen hergestellt, die sich in der Art der Wellung unterscheiden. Ringgewellte Schläuche bestehen aus einer Aneinanderreihung von ringförmig geschlossenen, parallelen Einzelwellen. Sie weisen eine Vielzahl paralleler Wellen gleichen Abstandes auf, deren Hauptebene senkrecht zur Schlauchachse steht.

Zum Anschluss von ringgewellten Metallschläuchen sind unterschiedliche Techniken bekannt. Beispielsweise wird eine Hülse über das anzuschließende Ende des Metallschlauchs gesteckt und mit diesem rundherum verschweißt. Alternativ dazu kann der Metallschlauch durch Löten verbunden werden. Eine andere Fügetechnik verformt das Schlauchende durch Zusammenbördeln der letzten zwei bis drei Wellen, um hierdurch einen Flansch zu bilden der als Anschluss dient.

Diese Anschlusstechniken sind aufwändig und erfordern besondere Fachkenntnisse sowie spezielle Werkzeuge.

In der US 6 099 046 A wird eine Anschlussvorrichtung beschrieben, bei der zunächst eine Überwurfmutter auf den ringgewellten Metallschlauch aufgeschoben wird. Danach wird eine Hülse auf den Metallschlauch aufgeschoben und ein ringartiges Element um den Metallschlauch platziert. Das ringartige Element besteht aus zwei Hälften. Die Hülse fixiert die beiden Hälften des geteilten ringartigen Elements. Ein Anschlussstück mit einem Außengewinde weist eine Aufnahmebohrung auf, in die der Metallschlauch eingeführt wird. Die Überwurfmutter wird auf das Außengewinde aufgeschraubt. Das ringartige Element weist eine Innenkontur auf, die der Außenkontur des Metallschlauchs entspricht. Es greift in zwei Wellentäler des Metallschlauchs ein. Die Hülse schiebt das ringartige Element in die Aufnahmebohrung des Anschlussstücks. Dadurch drückt das ringartige Element den Metallschlauch gegen eine innere schräge Fläche in der Aufnahmebohrung des Anschlussstücks.

In der EP 1 347 277 B1 wird ebenfalls eine Anschlussvorrichtung für einen ringgewellten Metallschlauch beschrieben. Auf ein Ende des Metallschlauchs werden eine Überwurfmutter, eine Hülse und ein ringartiges Element aufgeschoben. Als ringartiges Element wird ein Haltering nach Art eines Sprengrings eingesetzt, das einen kreisförmigen Querschnitt aufweist. Dann wird der Metallschlauch in die Aufnahmebohrung eines Anschlussstücks geschoben. Auf ein Außengewinde des Anschlussstücks wird die Überwurfmutter aufgeschraubt. Die Hülse drückt das ringartige Element in die Aufnahmebohrung des Anschlussstücks hinein. Das ringartige Element greift dabei in ein Wellental des Metallschlauchs ein und drückt die vorderste Welle des Metallschlauchs gegen eine umlaufende Schulter, die im Innern der Aufnahmebohrung ausgebildet ist.

Bei diesen herkömmlichen Anschlussvorrichtungen werden die Metallschläuche jeweils in eine Aufnahmebohrung des Anschlussstücks hinein geschoben und dort an innen liegenden Flächen angedrückt. Dadurch wird der freie Querschnitt der Aufnahmebohrung verkleinert.

Die Anschlussstücke dieser Vorrichtungen sind aufwändig herzustellen, da spezielle Aufnahmebohrungen zum Einführen der Metallschläuche notwendig sind. Somit sind solche Anschlussvorrichtungen kostspielig und nur für eine begrenzte Anzahl an Nennweiten verfügbar.

Weiterhin sind Hülsen erforderlich, welche die ringartigen Elemente in die Aufnahmebohrungen hinein schieben. Aufgrund der Vielzahl an Bauteilen ist die Montage aufwändig.

Aufgabe der Erfindung ist es, eine vielseitig einsetzbare Anschlussvorrichtung anzugeben, die robust ist und den Metallschlauch sicher fixiert. Zudem soll die Anschlussvorrichtung leicht montierbar und kostengünstig herzustellen sein.

Diese Aufgabe wird erfindungsgemäß dadurch gelöst, dass das ringartige Element eine abgeschrägte Außenfläche aufweist. Im Gegensatz zu geraden bzw. runden Außenflächen, weist das ringartige Element bei der erfindungsgemäßen Anschlussvorrichtung zumindest bereichsweise eine schräge Außenfläche auf. Der Außendurchmesser des ringartigen Elements nimmt dabei in Richtung der Anschlussseite, das heißt in Richtung der dem Anschlussstück abgewandten Seiten im Wesentlichen linear ab. Ringe mit einem abnehmenden Außendurchmesser werden auch als Konusringe bezeichnet. Diese haben die Form eines Kegels bzw. Kegelstumpfes.

Durch die schräge Außenfläche wird das ringartige Element beim Aufschrauben der Überwurfmutter in Richtung des Anschlussstücks geschoben und dabei kontinuierlich in ein Wellental des Metallschlauchs hineingedrückt.

Vorzugsweise weist die Überwurfmutter oder die Einschraubhülse eine abgeschrägte Innenfläche auf. Die abgeschrägte Innenfläche der Überwurfmutter oder der Einschraubhülse ist auf die abgeschrägte Außenfläche des ringartigen Elements so abgestimmt, dass beide Flächen beim Aufschrauben der Mutter aufeinander gleiten. Die beiden schrägen Flächen sind parallel zueinander ausgerichtet. Ein Zusammenwirken zweier schrägen Flächen, die beim Zusammenschrauben aufeinander gleiten, wird auch als Konusverschraubung bezeichnet.

Beim Anschlussstück werden Innenfläche, Außenfläche und Frontflächen unterschieden. Durch einen von den Innenflächen definierten Innenquerschnitt strömt das Fluid. Die Außenfläche ist bereichsweise mit einem Außengewinde zum Aufschrauben der Überwurfmutter versehen. Bei einer alternativen Weiterbildung der erfindungsgemäßen Anschlussvorrichtung weist das Anschlussstück ein Innengewinde auf, so dass die Einschraubhülse mit ihrem Außengewinde in das Anschlussstück eingeschraubt werden kann. An der Vorderseite und Hinterseite des Anschlussstücks sind Frontflächen ausgebildet. Eine dieser Frontflächen dient zum Andrücken des Metallschlauchs.

Im Gegensatz zu Anschlussvorrichtungen nach dem Stand der Technik wird der Metallschlauch nicht in eine Aufnahmebohrung im Anschlussstück hinein geschoben und an eine Fläche im Innern dieser Aufnahmebohrung gedrückt, sondern an eine außen liegenden Frontfläche. Da bei der erfindungsgemäßen Vorrichtung keine Aufnahmebohrung für den Metallschlauch erforderlich ist, ist die Herstellung des Anschlussstücks weniger aufwändig und somit kostengünstiger. Zudem ist die Anschlussvorrichtung vielseitig anwendbar, da sie für einen großen Bereich an Nennweiten einsetzbar ist.

Das Anschlussstück wird in horizontaler Richtung durchströmt. Richtungen senkrecht hierzu werden als vertikal bezeichnet.

Vorzugsweise ist die äußere umlaufende Frontfläche des Anschlussstücks, an die der Metallschlauch gedrückt wird, vertikal ausgerichtet.

Das ringartige Element weist vorzugsweise ebenfalls eine vertikale umlaufende Fläche auf, die das Ende des Metallschlauches beim Anziehen der Überwurfmutter oder der Einschraubhülse staucht und gegen die vertikale äußere Frontfläche des Anschlussstücks drückt. Der gestauchte Bord des Metallschlauchs ist dabei zwischen der vertikalen Frontfläche des Anschlussstücks und der vertikalen Fläche des ringartigen Elements eingeklemmt.

Bei einer besonders vorteilhaften Variante der Erfindung weist das ringartige Element an seiner Innenseite einen Bereich mit einem Profil auf, das in mindestens ein Wellental des Metallschlauchs eingreift. Insbesondere kann das ringartige Element einen in etwa L-förmigen Querschnitt aufweisen. Außerdem kann das ringartige Element an seiner Innenseite zudem einen Bereich aufweisen, der zumindest einen Wellenberg radial umschließt.

Das ringartige Element setzt sich vorzugsweise aus mindestens zwei eigenständigen Teilen zusammen, wobei es sich als besonders günstig erweist, wenn das ringartige Element in zwei gleich große Hälften unterteilt ist. Jedes Teil bildet einen Halbkreis. Die beiden separaten Teile werden um den ringgewellten Metallschlauch platziert und ergänzen sich zu dem ringartigen Element. Durch das Aufschrauben der Überwurfmutter bzw. das Einschrauben der Hülse werden die beiden Hälften zu dem ringartigen Element zusammengefügt. Dadurch entsteht eine vorkonfektionierte Anschlussvorrichtung. Diese Vormontage der Anschlussvorrichtung ermöglicht einen schnellen Einbau vor Ort. Beispielsweise werden die erfindungsgemäßen Anschlussvorrichtungen bei Solarkollektoren eingesetzt, die auf Dächern angeordnet sind. Bei der vorkonfektionierten Anschlussvorrichtung ist die Überwurfmutter oder die Einschraubhülse bereits aufgeschraubt bzw. eingeschraubt und muss bei der Endmontage nur noch bis zum Anschlag angezogen werden. Bereits beim vormontierten Zustand wird dabei gewährleistet, dass der Metallschlauch nicht aus der Anschlussvorrichtung herausrutscht und das ringartige Element nicht verloren geht.

Dabei ist es vorteilhaft, wenn die Überwurfmutter an ihrem das ringartige Edlement übergreifenden Ende einen radial nach innen vorstehenden umlaufenden Vorsprung aufweist, wobei der lichte Durchmesser der Überwurfmutter im Bereich des Vorsprungs einerseits kleiner ist als der Außendurchmesser des ringartigen Elements im Bereich von dessen abgeschrägter Außenfläche und andererseits größer als der effektive Außendurchmesser des Wellschlauchs. Das in ein Wellental des Wellschlauchs eingreifende ringartige Element sichert so die Überwurfmutter gegen Verlust und umgekehrt. Gleiches gilt sinngemäß auch für die Einschraubhülse.

Als besonders günstig erweist es sich, wenn das Anschlussstück einen umlaufenden axialen Vorsprung aufweist, auf den der Metallschlauch aufschiebbar ist. Der Innendurchmesser des Metallschlauchs entspricht dabei in etwa dem Außendurchmesser des Anschlussstücks im Bereich des Vorsprungs. Bei Befestigung des Metallschlauchs schiebt das ringartige Element das Ende des Metallschlauchs über diesen Vorsprung und drückt den Bord gegen eine vertikale Frontfläche des Anschlussstücks radial außerhalb des Vorsprungs.

Während der Metallschlauch vorzugsweise in Edelstahl ausgebildet ist, bestehen die Überwurfmutter oder die Einschraubhülse und das ringartige Element insbesondere aus Messing oder dergleichen und das Anschlussstück aus Kupfer oder dergleichen.

Weitere Merkmale und Vorteile der Erfindung ergeben sich aus der Beschreibung eines Ausführungsbeispiels anhand von Zeichnungen.
- Fig. 1: zeigt eine erste Ausgestaltung der erfindungsgemäßen Anschlussvorrichtung im vorkonfektionierten Zustand;
- Fig. 2: zeigt die Anschlussvorrichtung gemäß Figur 1 im fertig montierten Zustand;
- Fig. 3: zeigt eine zweite Ausgestaltung der erfindungsgemäßen Anschlussvorrichtung im vorkonfektionierten Zustand; und
- Fig. 4: zeigt die Anschlussvorrichtung gemäß Figur 3 im fertig montierten Zustand.

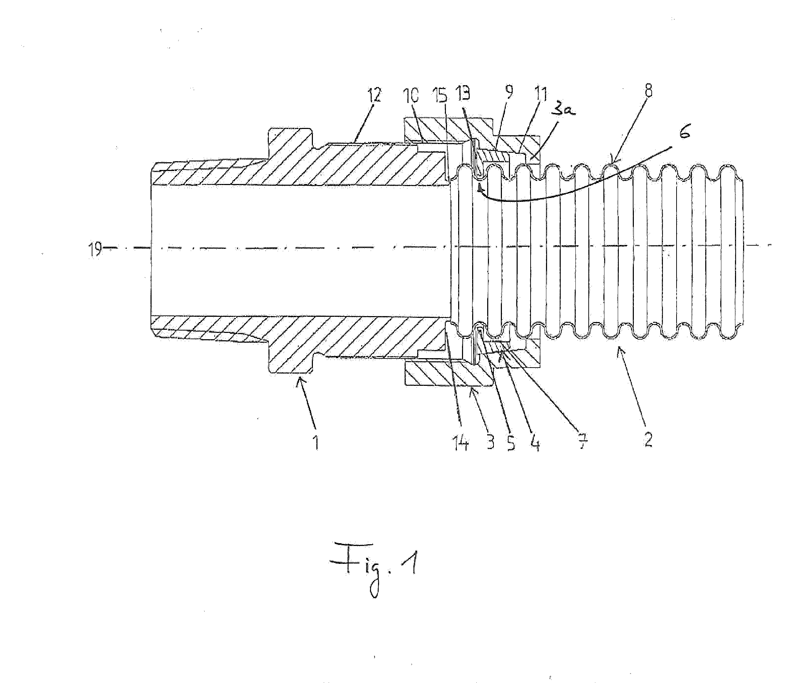

Fig. 1 zeigt ein Anschlussstück 1, an dem ein ringgewellter Metallschlauch 2 zu befestigen ist. Dazu wird zunächst auf den ringgewellten Metallschlauch 2 eine Überwurfmutter 3 aufgeschoben und dann ein ringartiges Element 4 anschlussseitig der Überwurfmutter 3, das heißt links in Figur 1 auf dem Metallschlauch platziert. Das ringartige Element 4 setzt sich aus zwei gleich großen Hälften zusammen. Die Innenseite des ringartigen Elements 4 weist einen Bereich 5 mit einem in etwa L-förmigen Profil auf, dessen einer Schenkel in das letzte vollständige Wellental 6 des ringgewellten Metallschlauchs 2 eingreift, und einen Bereich 7, der zumindest einen Wellenberg 8 des ringgewellten Metallschlauchs 2 radial umschließt.

Die Außenseite 9 des ringartigen Elements 4 ist abgeschrägt. Der Außendurchmesser des ringartigen Elements 4 verringert sich in Richtung des anzuschließenden Metallschlauchs 2.

Die Überwurfmutter 3 weist an ihrer Innenseite einen Bereich mit einem Innengewinde 10 und einen Bereich mit einer abgeschrägten Innenfläche 11 auf. Die Innenfläche 11 ist zum anzuschließenden Metallschlauch 2 hin abgeschrägt, so dass der Innendurchmesser in diesem Bereich der Überwurfmutter 3 zum Metallschlauch 2 hin abnimmt.

Bei Bezugszeichen 3a weist die Überwurfmutter 3 einen umlaufenden Vorsprung auf, wobei der lichte Durchmesser der Überwurfmutter im Bereich des Vorsprungs 3a etwa genau dem Außendurchmesser des Wellschlauchs 2 entspricht.

Das Anschlussstück 1 umfasst einen umlaufenden Vorsprung 15, auf den der Metallschlauch 2 aufgeschoben wird. Der Vorsprung 15 ragt in den Metallschlauch 2 hinein.

Zum Anziehen der Schraubverbindung ist das Anschlussstück 1 mit einem Sechskant Außenprofil 16 und die Überwurfmutter 3 mit einem Sechskant Außenprofil 17 versehen.

Das Anschlussstück 1 weist eine durchgehende Innenbohrung 18 für die Fluidströmung auf. Das Anschlussstück 1, die Überwurfmutter 3 und das ringförmige Element 4 sind rotationssymmetrisch zur Achse 19 ausgebildet, die in horizontaler Richtung verläuft. Die äußere Frontfläche 14 des Anschlussstücks 1 und die Frontfläche 13 des ringartigen Elements 4 sind vertikal zu dieser Achse 19 ausgerichtet.

Das Anschlussstück 1 ist an der dem Metallschlauch 2 gegenüberliegenden Seite mit einem weiteren Außengewinde 20 versehen. An diesem Ende des Anschlussstücks 1 kann ein Leitungselement angeschlossen werden.

Die Überwurfmutter 3 wird auf eine Außengewinde 12 des Anschlussstücks 1 aufgeschraubt. Dabei gleitet die abgeschrägte Innenfläche 11 der Überwurfmutter 3 auf der abgeschrägten Außenfläche 9 des ringartigen Elements 4. Die beiden Hälften des ringartigen Elements 4 werden zusammendrückt und das ringartige Element 4 wird zum Anschlussstück 1 geschoben. Eine vertikale Frontfläche 13 des ringartigen Elements 4 drückt die letzte oder endständige Welle des Metallschlauchs 2 gegen die vertikale Frontfläche 14 des Anschlussstücks 1.

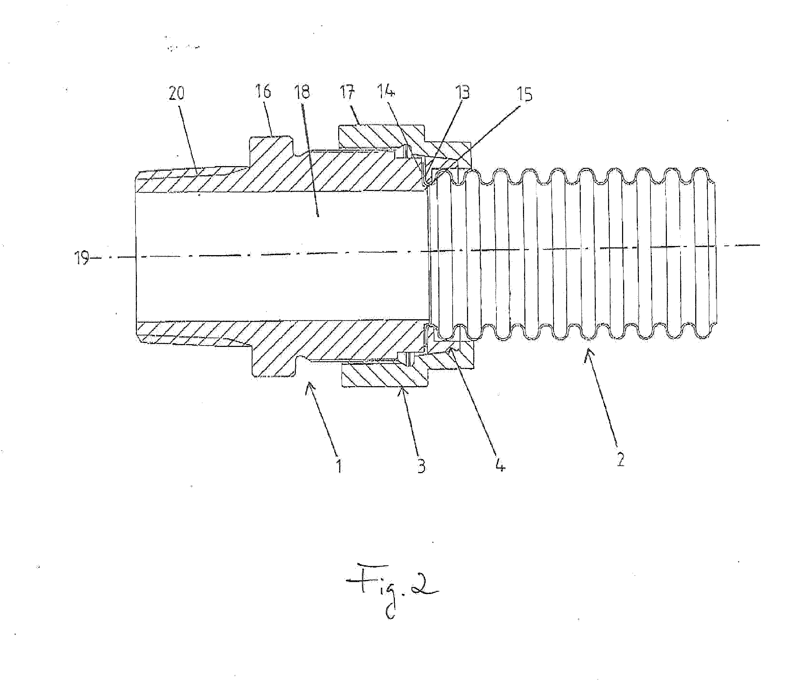

Fig. 2 zeigt, dass die letzte Welle des Metallschlauchs 2 zwischen der äußeren vertikalen Frontfläche 14 des Anschlussstücks 1 und der vertikalen Frontfläche 13 des ringartigen Elements 4 eingeklemmt ist.

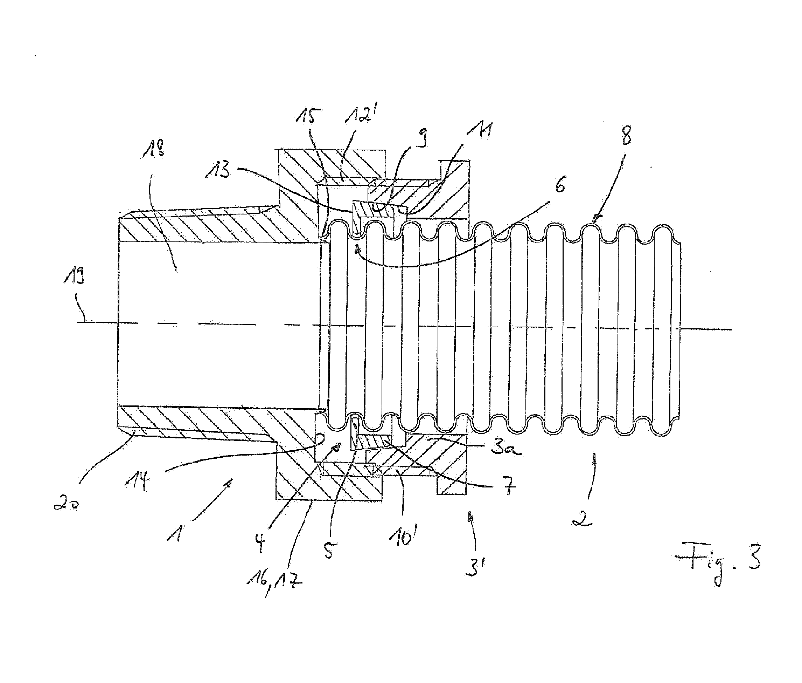

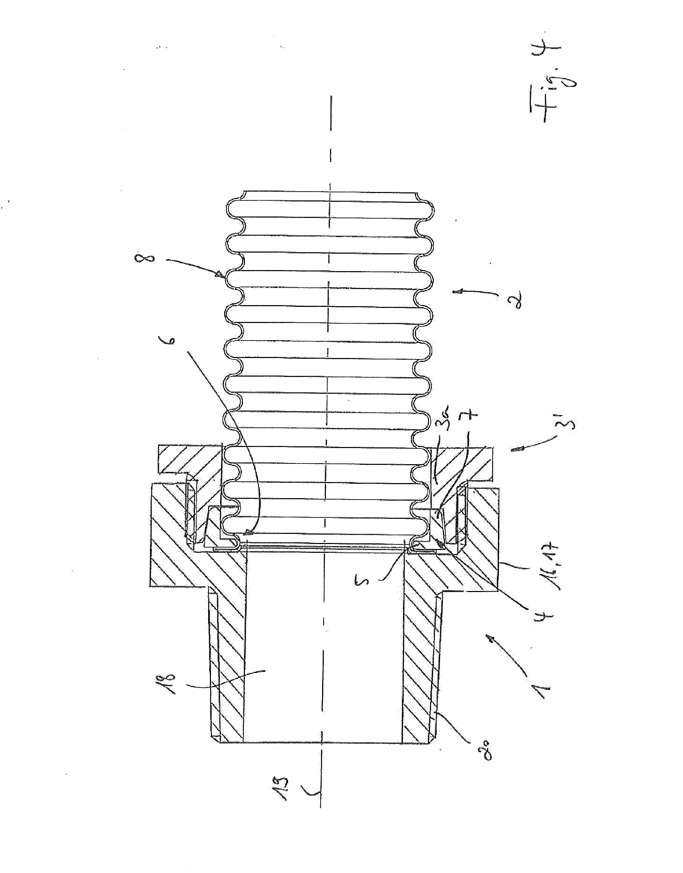

In den Figuren 3 und 4, welche eine zweite Ausgestaltung der erfindungsgemäßen Anschlussvorrichtung zeigen, sind die Funktionen des Anschlussstücks 1 und der Überwurfmutter 3 gemäß den Figuren 1 und 2 gerade vertauscht. Entsprechend weist das ring- oder hülsenartige Element 3', welches ansonsten funktional der Überwurfmutter 3 gemäß den Figuren 1 und 2 entspricht, ein Außengewinde 10' auf, welches mit einem entsprechenden Innengewinde 12' des Anschlussstücks 1' zusammenwirkt, welches Anschlussstück 1' entsprechend nicht als Einschraubteil sondern als Aufschraubteil ausgebildet ist.

Ansonsten entsprechen die in den Figuren 3 und 4 gezeigten Elemente einschließlich ihrer Funktion den bereits weiter oben anhand der Figuren 1 und 2 ausführlich beschriebenen Bestandteilen einer erfindungsgemäßen Anschlussvorrichtung.

Während Figur 3 die Anschlussvorrichtung in einem vorkonfektionierten Zustand zeigt, stellt Figur 4 die Anschlussvorrichtung in ihrem fertig montierten Zustand dar.

Bei beiden dargestellten Ausführungsformen ergibt sich als besonderer Vorteil, dass das auf das ringartige Element 4 einwirkende Element 3 (Überwurfmutter) bzw. 3' (Einschraubhülse/Einschraubring) auch nach dem Lösen der Verbindung verliersicher und drehbar mit dem Metallschlauch 2 verbunden bleibt, was die Handhabung bei der Montage oder Demontage stark vereinfacht.

## Patentansprüche

1. Anschlussvorrichtung für einen ringgewellten Metallschlauch (2) mit einem ringartigen Element (4), das mittels einer Überwurfmutter (3) oder einer Einschraubhülse (3') den Metallschlauch (2) an ein Anschlussstück (1) drückt, **dadurch gekennzeichnet,**
**dass** das ringartige Element (4) eine abgeschrägte Außenfläche (9) aufweist.

2. Anschlussvorrichtung nach Anspruch 1, **dadurch gekennzeichnet, dass** die Überwurfmutter (3) oder die Einschraubhülse (3') eine abgeschrägte Innenfläche (11) aufweist.

3. Anschlussvorrichtung nach Anspruch 1 oder 2, **dadurch gekennzeichnet, dass** das ringartige Element (4) den Metallschlauch (2) gegen eine äußere Frontfläche (14) des Anschlussstücks (1) drückt.

4. Anschlussvorrichtung nach einem der Ansprüche 1 bis 3, **dadurch gekennzeichnet, dass** sich das ringartige Element (4) aus zumindest zwei eigenständigen Teilen zusammensetzt.

5. Anschlussvorrichtung nach einem der Ansprüche 1 bis 4, **dadurch gekennzeichnet, dass** das ringartige Element (4) an seiner Innenseite einen Bereich (5) mit einem Profil aufweist, das in mindestens ein Wellental (6) des Metallschlauchs (2) eingreift.

6. Anschlussvorrichtung nach einem der Ansprüche 1 bis 5, **dadurch gekennzeichnet, dass** das Anschlussstück (1) einen umlaufenden axialen Vorsprung (15) aufweist, auf den der Metallschlauch (2) aufschiebbar ist.

7. Anschlussvorichtung nach einem der Ansprüche 1 bis 6, **dadurch gekennzeichnet, dass** die Überwurfmutter (3) oder die Einschraubhülse (3') einen endständigen Vorsprung (3a) aufweist, wobei ein Innendurchmesser der Überwurfmutter (3) oder die Einschraubhülse (3') im Bereich des Vorsprungs (3a) etwa einem Außendurchmesser des Metallschlauchs (2) entspricht.

8. Anschlussvorrichtung nach einem der Ansprüche 1 bis 7, **dadurch gekennzeichnet, dass** das ringartige Element (4) einen etwa L-förmigen Querschnitt aufweist, wobei ein Schenkel in ein Wellental (6) des Metallschlauchs eingreift und ein anderer Schenkel zumindest einen Wellenberg des Metallschlauchs (2) übergreift.

9. Anschlussvorrichtung nach einem der Ansprüche 1 bis 8, **dadurch gekennzeichnet, dass** das ringartige Element (4) in das letzte vollständige Wellental (6) des Metallschlauchs (2) eingreift.

10. Anschlussvorrichtung nach einem der Ansprüche 1 bis 9, **dadurch gekennzeichnet, dass** das ringartige Element (4) mit seiner dem Anschlussstück (1) gewandten Frontfläche (13) wenigstens einen endständigen Wellenberg des Metallschlauchs (2) zur Schaffung einer metallischen Dichtung flach gegen eine gegenüber liegende Frontfläche (14) des Anschlussstücks (1) drückt.

11. Anschlussvorrichtung nach einem der Ansprüche 1 bis 10, **dadurch gekennzeichnet, dass** das Anschlussstück (1) ein Außengewinde (12) aufweist, auf welches die Überwurfmutter (3) mit einem Innengewinde (10) aufgeschraubt oder aufschraubbar ist.

12. Anschlussvorrichtung nach einem der Ansprüche 1 bis 10, **dadurch gekennzeichnet, dass** das Anschlussstück (1) ein Innengewinde (12') aufweist, in welches die Einschraubhülse (3') mit einem Außengewinde (10') eingeschraubt oder einschraubbar ist.

13. Anschlussvorrichtung nach einem der Ansprüche 1 bis 12, **dadurch gekennzeichnet, dass** das ringartige Element (4) mittels der Überwurfmutter (3) oder der Einschraubhülse (3') verliersicher auf dem Metallschlauch (2) gehalten ist, auch nach Lösen der Verbindung zwischen Anschlussstück (1) einerseits und Überwurfmutter (3) oder Einschraubhülse (3') andererseits.
